# EUROPÄISCHE PATENTSCHRIFT

(11) **EP 4 041 473 B1**
(45) Veröffentlichungstag und Bekanntmachung des Hinweises auf die Patenterteilung: **23.08.2023**
(21) Anmeldenummer: 20789835.4
(22) Anmeldetag: 01.10.2020
(51) Int. Cl.: B21D 53/02, F28D 9/00, B23K 1/00, F28F 21/08, F28F 3/02, B21D 53/04, B23K 1/008

(54) **PLATTENWÄRMETAUSCHER, VERFAHRENSTECHNISCHE ANLAGE UND VERFAHREN**
PLATE HEAT EXCHANGER, PROCESSING SYSTEM AND METHOD OF MANUFACTURE
ÉCHANGEUR DE CHALEUR À PLAQUES, INSTALLATION TECHNIQUE ET PROCÉDÉ DE FABRICATION

(30) Priorität: 11.10.2019 EP 19020569
(43) Veröffentlichungstag der Anmeldung: 17.08.2022
(73) Patentinhaber: Linde GmbH, 82049 Pullach (DE)
(72) Erfinder: ENGLERT, Thomas, 82205 Gilching (DE)
(74) Vertreter: Meilinger, Claudia Sabine
(86) Internationale Anmeldenummer: PCT/EP2020/025443
(87) Internationale Veröffentlichungsnummer: WO 2021/069097

(56) Entgegenhaltungen:
- EP-A1- 2 843 348
- EP-A1- 3 531 055
- US-A- 4 626 295

## Beschreibung

Die Erfindung betrifft einen Plattenwärmetauscher für eine verfahrenstechnische Anlage, eine verfahrenstechnische Anlage mit einem derartigen Plattenwärmetauscher und ein Verfahren zum Herstellen eines derartigen Plattenwärmetauschers.

Ein Plattenwärmetauscher umfasst einen Wärmetauscherblock, der aus abwechselnd angeordneten Heizflächenelementen, insbesondere sogenannten Fins oder Heat Transfer Fins, und Trennplatten aufgebaut ist. Die Heizflächenelemente sind aus gewellten oder gerippten Aluminiumblechen gefertigt, wohingegen die Trennplatten aus glatten Aluminiumblechen gefertigt sind. Die vorgenannten Bauteile des Wärmetauscherblocks werden mit Hilfe eines Aluminiumlots in einem Lötofen miteinander verlötet, insbesondere hartverlötet. Das Aluminiumlot wird vor dem Verlöten der Bauteile auf die Trennplatten aufgebracht.

EP 3 531 055 A1 offenbart einen Plattenwärmetauscher und ein Verfahren zur Herstellung eines Plattenwärmetauschers gemäß den Oberbegriffen der unabhängigen Patentansprüche 1 und 11.

Für das Verlöten der Bauteile des Plattenwärmetauschers wird üblicherweise eine Aluminiumlotlegierung mit einem relativ engen und hohen Schmelzbereich verwendet. Um die einzelnen Bauteile des Wärmetauscherblocks zuverlässig miteinander verlöten zu können, ist es daher erforderlich, die Schmelztemperatur des verwendeten Aluminiumlots sowohl im Kern als auch am Rand des Wärmetauscherblocks zu erreichen. Da sich der Wärmetauscherblock im Lötofen von seinem Rand zu seinem Kern hin langsam erwärmt, befindet sich das Aluminiumlot am Rand des Wärmetauscherblocks für mehrere Stunden in einem schmelzflüssigen Bereich. Im Kern hingegen befindet sich das Aluminiumlot nur für einige Minuten im schmelzflüssigen Bereich.

Hierdurch können lange Lötzeiten entstehen. Dies gilt es im Sinne einer wirtschaftlichen Produktion zu vermeiden. Ferner kann es durch die langen Lötzeiten am Rand des Wärmetauscherblocks zu ungünstigen Effekten und Reaktionen zwischen den Trennplatten und den Heizflächenelementen kommen. Besonders die lokale Bildung niedrigschmelzender Al-Si-Eutektika, welche sich durch Erosionserscheinungen an den Heizflächenelementen negativ bemerkbar machen können, gilt es zu vermeiden. Dabei können Löcher und/oder Kerben in die Heizflächenelemente gefressen werden, welche sich durch einen niedrigeren Berstdruck beziehungsweise Betriebsdruck als bei den Qualifizierungen der Heizflächenelemente äußern können. Insbesondere bei höheren und breiteren Konstruktionen des Wärmetauscherblocks kann dies einen stark limitierenden Faktor darstellen. Auch dies gilt es zu vermeiden.

Vor diesem Hintergrund besteht eine Aufgabe der vorliegenden Erfindung darin, einen verbesserten Plattenwärmetauscher für eine verfahrenstechnische Anlage zur Verfügung zu stellen.

Demgemäß wird ein Plattenwärmetauscher für eine verfahrenstechnische Anlage vorgeschlagen. Der Plattenwärmetauscher weist einen Wärmetauscherblock auf, der eine Vielzahl abwechselnd angeordneter Heizflächenelemente und Trennplatten umfasst, wobei die Trennplatten mit Hilfe an den Trennplatten vorgesehener Lotschichten mit den Heizflächenelementen verlötet sind. Erfindungsgemäß umfassen bei zumindest einem Teil der Trennplatten die Lotschichten zumindest zwei sich in ihrer Legierungszusammensetzung voneinander unterscheidende Lotbereiche.

Dadurch, dass die Lotschichten zumindest zwei sich in ihrer Legierungszusammensetzung voneinander unterscheidende Lotbereiche umfassen, ist es möglich, die Lotschichten der einzelnen Trennplatten hinsichtlich ihres Schmelzbereichs so anzupassen, dass bei einer Erwärmung des Wärmetauscherblocks in einem Lötofen, auch dann, wenn dieser in seinem Kern nicht dieselbe Temperatur aufweist wie an seinen Rand, alle Lotbereiche gleichzeitig aufschmelzen. Hierdurch können zum einen die Lötzeiten verringert werden und zum anderen kann die Bildung niedrigschmelzender Al-Si-Eutektika verhindert werden. Hierdurch können höhere Berstdrücke erreicht werden und Größenlimitierungen bei der Konstruktion des Wärmetauscherblocks fallen weg.

Der Plattenwärmetauscher ist insbesondere ein sogenannter Plate Fin Heat Exchanger (PFHE) oder kann als solcher bezeichnet werden. Die Heizflächenelemente sind sogenannte Fins, insbesondere sogenannte Heat Transfer Fins, oder können als Fins bezeichnet werden. Die Heizflächenelemente können als gewellte oder gerippte Bleche, beispielsweise als Aluminiumbleche, ausgebildet sein. Die Trennplatten sind Trennbleche oder können als Trennbleche bezeichnet werden. Die Trennplatten können ebenfalls aus Aluminium gefertigt sein. Die Anzahl der Heizflächenelemente und die Anzahl der Trennplatten ist jeweils beliebig. Darunter, dass die Heizflächenelemente und die Trennplatten "abwechselnd" angeordnet sind, ist insbesondere zu verstehen, dass jeweils zwischen zwei Heizflächenelementen eine Trennplatte und zwischen zwei Trennplatten ein Heizflächenelement angeordnet ist.

Der Wärmetauscherblock weist bevorzugt eine quaderförmige Geometrie mit einer Breitenrichtung oder x-Richtung, einer Höhenrichtung oder y-Richtung und einer Tiefenrichtung oder z-Richtung auf. In der Höhenrichtung weist der Wärmetauscherblock bevorzugt eine größere Dimension als in der Breitenrichtung und der Tiefenrichtung auf, so dass sich eine langgestreckte quaderförmige Geometrie ergibt. Die Heizflächenelemente und die Trennplatten sind bevorzugt in der Tiefenrichtung übereinandergestapelt. Jedes Trennblech, insbesondere eine Vorderseite jedes Trennblechs, spannt bevorzugt eine Ebene auf, die durch die Breitenrichtung und die Höhenrichtung definiert ist.

Die Heizflächenelemente sind bevorzugt mit Hilfe von Randleisten, insbesondere Aluminiumrandleisten, eingefasst, die ebenfalls Teil des Wärmetauscherblocks sind. Die Randleisten sind mit den Trennplatten und/oder den Heizflächenelementen verlötet. Der Wärmetauscherblock kann Deckplatten aufweisen, die den Wärmetauscherblock in der Tiefenrichtung nach vorne und hinten abschließen. Die Deckplatten können außenliegende Trennplatten sein. Die Deckplatten sind mit äußersten Heizflächenelementen verlötet.

Dass die Lotschichten an den Trennplatten "vorgesehen" sind, kann bedeuten, dass die Lotschichten fest mit den Trennplatten verbunden, beispielsweise auf diese aufplattiert, sind. Die Lotschichten können jedoch auch auf jede andere geeignete Art und Weise auf die Trennplatten aufgebracht werden. Die Lotschichten sind somit bevorzugt Teil der Trennplatten. Unter einer "Lötverbindung" ist eine stoffschlüssige Verbindung zu verstehen, bei der mit Hilfe eines Lots, vorliegend mit Hilfe eines Aluminiumlots, die Heizflächenelemente und die Trennplatten miteinander verbunden werden. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen. Beim Löten wird eine Oberflächenlegierung erzeugt, die zu verbindenden Bauteile, nämlich die Heizflächenelemente und die Trennplatten, werden jedoch in der Tiefe nicht aufgeschmolzen. Vorliegend sind die Heizflächenelemente und die Trennplatten bevorzugt miteinander hartverlötet.

Die Lotschicht kann als Ebene oder Fläche zu sehen sein, die in mehrere Lotbereiche unterteilt ist. Das heißt, die Lotbereiche sind nebeneinander und nicht übereinander positioniert. Die Anzahl der unterschiedlichen Lotbereiche ist beliebig. Zumindest sind jedoch zwei unterschiedliche Lotbereiche vorgesehen. Dass zumindest ein "Teil" der Trennplatten jeweils eine Lotschicht mit mehreren sich voneinander unterscheidenden Lotbereichen aufweist, bedeutet im Umkehrschluss, dass auch Trennplatten vorgesehen sein können, die jeweils eine Lotschicht mit einer homogenen Legierungszusammensetzung aufweist.

Insbesondere weisen die sich in ihrer Legierungszusammensetzung oder metallurgischen Zusammensetzung unterscheidenden Lotbereiche einer Lotschicht unterschiedliche Schmelzbereiche auf. Unter dem "Schmelzbereich" ist vorliegend ein Temperaturintervall zwischen der Solidustemperatur und der Liquidustemperatur des für den jeweiligen Lotbereich verwendeten Lots zu verstehen. Der Schmelzbereich ist also ein Temperaturbereich, in dem der jeweilige Lotbereich aufschmilzt. Die Solidustemperatur kennzeichnet die Temperatur des Lots, bei und unterhalb der das Lot vollständig in fester Phase vorliegt. Die Liquidustemperatur kennzeichnet die Temperatur des Lots, ab deren Unterschreitung das Gemenge aus einer homogen flüssigen Phase zu erstarren beginnt. Zwischen Solidus- und Liquidustemperatur ist das Gemenge bei Legierungen breiig, es existieren feste und flüssige Phasen nebeneinander.

Gemäß einer Ausführungsform weisen die Lotbereiche sich voneinander unterscheidende Schmelzbereiche auf.

Bevorzugt ist zumindest ein erster Lotbereich vorgesehen, der ein erstes Lot, insbesondere ein erstes Aluminiumlot, aufweist. Ferner ist zumindest ein zweiter Lotbereich vorgesehen, der ein zweites Lot, insbesondere ein zweites Aluminiumlot, aufweist. Das erste Lot und das zweite Lot unterscheiden sich in ihrer Legierungszusammensetzung derart, dass das erste Lot einen höheren Schmelzbereich als das zweite Lot oder umgekehrt aufweist. Die Anzahl der Lotbereiche und damit die Anzahl der verwendeten Lote ist grundsätzlich beliebig.

Gemäß einer weiteren Ausführungsform sind die Lotbereiche so angeordnet, dass ein Temperaturgradient der Schmelzbereiche derart ausgebildet ist, dass die Schmelzbereiche ausgehend von Außenflächen des Wärmetauscherblocks hin zu einem Kern des Wärmetauscherblocks abnehmen.

Unter dem "Kern" des Wärmetauscherblocks ist vorliegend ein Bereich desselben zu verstehen, der am weitesten von den Außenflächen entfernt im Inneren des Wärmetauscherblocks angeordnet ist. Beispielsweise kann der Kern quaderförmig oder kugelförmig sein. Der Kern erwärmt sich bei einer Wärmeeinbringung in die Außenflächen des Wärmetauscherblocks als letztes. Bevorzugt sind sechs Außenflächen vorgesehen, die die Quaderform des Wärmetauscherblocks definieren. Unter dem "Temperaturgradient" ist vorliegend zu verstehen, dass die Schmelzbereiche ausgehend von den Außenflächen hin zu dem Kern in ihrem Temperaturbereich kontinuierlich abnehmen. Das heißt, die Lotbereiche im Kern beginnen bei einer niedrigeren Temperatur aufzuschmelzen als den Außenflächen nahe Lotbereiche.

Gemäß einer weiteren Ausführungsform weist der Wärmetauscherblock eine Breitenrichtung, eine Höhenrichtung und eine Tiefenrichtung auf, wobei der Temperaturgradient der Schmelzbereiche in jeder der Richtungen ausgehend von den Außenflächen hin zu dem Kern vorgesehen ist.

Mit anderen Worten wird somit ausgehend von den Außenflächen hin zu dem Kern ein dreidimensionaler Temperaturgradient erzielt.

Gemäß einer weiteren Ausführungsform sind bei den Trennplatten, die Lotschichten mit zumindest zwei sich in ihrer Legierungszusammensetzung voneinander unterscheidenden Lotbereiche umfassen, die Lotbereiche nebeneinander auf der jeweiligen Trennplatte platziert.

Die Lotbereiche bilden somit auf den Trennplatten flächige Abschnitte der Lotschicht, die nebeneinander angeordnet sind. Die Lotschicht ist somit in mehrere Lotbereiche unterteilt. Jedem Lotbereich ist, wie zuvor erwähnt, ein Lot, insbesondere ein Aluminiumlot, zugeordnet, das sich in seiner Legierungszusammensetzung und damit in seinem Schmelzbereich von dem benachbarten Lotbereich unterscheidet.

Gemäß einer weiteren Ausführungsform sind ein erster Lotbereich und ein zweiter Lotbereich vorgesehen, wobei der erste Lotbereich einen höheren Schmelzbereich als der zweite Lotbereich aufweist, und wobei der zweite Lotbereich von dem ersten Lotbereich umgeben ist.

Beispielsweise kann der zweite Lotbereich mittig an oder auf der jeweiligen Trennplatte platziert sein und eine rechteckförmige Geometrie aufweisen. Der erste Lotbereich läuft dann bevorzugt rahmenförmig um den zweiten Lotbereich um und schließt diesen insbesondere in der Breitenrichtung und in der Höhenrichtung ein.

Gemäß einer weiteren Ausführungsform ist ein dritter Lotbereich vorgesehen, wobei der zweite Lotbereich einen höheren Schmelzbereich als der dritte Lotbereich aufweist, wobei der dritte Lotbereich von dem zweiten Lotbereich umgeben ist.

Bevorzugt ist der dritte Lotbereich mittig an oder auf der jeweiligen Trennplatte platziert und weist eine rechteckförmige Geometrie auf. Der zweite Lotbereich läuft dann bevorzugt rahmenförmig um den dritten Lotbereich um und schließt diesen ein. Der erste Lotbereich läuft bevorzugt rahmenförmig um den zweiten Lotbereich um und schließt diesen ein.

Gemäß einer weiteren Ausführungsform weisen die Trennplatten jeweils ein Aluminiumblech auf, auf das die jeweilige Lotschicht aufgebracht ist.

Beispielsweise kann die Lotschicht als Lotplattierung auf das Aluminiumblech aufgebracht sein. Die Lotschicht kann jedoch auch auf jede andere geeignete Art und Weise auf das Aluminiumblech aufgebracht sein.

Gemäß einer weiteren Ausführungsform ist die Lotschicht einseitig oder beidseitig auf das Aluminiumblech aufgebracht.

Insbesondere weist das Aluminiumblech eine Vorderseite und eine der Vorderseite abgewandte Rückseite auf. Sowohl die Vorderseite als auch die Rückseite können jeweils mit einer Lotschicht versehen sein. Es kann auch nur die Vorderseite oder nur die Rückseite eine Lotschicht aufweisen.

Ferner wird eine verfahrenstechnische Anlage mit einem derartigen Plattenwärmetauscher vorgeschlagen.

Die verfahrenstechnische Anlage kann eine Vielzahl derartiger Plattenwärmetauscher umfassen. Die verfahrenstechnische Anlage kann beispielsweise eine Anlage zur Luftzerlegung, zur Herstellung von Flüssiggas, eine in der petrochemischen Industrie eingesetzte Anlage oder dergleichen sein.

Weiterhin wird ein Verfahren zum Herstellen eines Wärmetauscherblocks für einen Plattenwärmetauscher einer verfahrenstechnischen Anlage vorgeschlagen. Das Verfahren umfasst die folgenden Schritte: a) Bereitstellen einer Vielzahl an Heizflächenelementen, b) Bereitstellen einer Vielzahl an Trennplatten, c) Vorsehen von Lotschichten an den Trennplatten, d) abwechselndes Anordnen der Heizflächenelemente und der Trennplatten, und e) Einbringen von Wärme in die Heizflächenelemente und die Trennplatten, um diese mit Hilfe der Lotschichten zu dem Wärmetauscherblock zu verlöten. Erfindungsgemäß umfassen bei zumindest einem Teil der Trennplatten die Lotschichten zumindest zwei sich in ihrer Legierungszusammensetzung voneinander unterscheidende Lotbereiche.

In dem Schritt a) können beispielsweise Aluminiumbleche gewellt oder gerippt werden. In dem Schritt b) werden beispielsweise Aluminiumbleche passend zugeschnitten. Die Schritte a) und b) können gleichzeitig oder aufeinanderfolgend durchgeführt werden. Der Schritt c) kann zusammen mit dem Schritt b), vor diesem oder nach diesem durchgeführt werden. In dem Schritt c) werden die Lotschichten beispielsweise aufplattiert. Die Lotschichten können jedoch auch in jeder anderen geeigneten Art und Weise auf die Trennplatten aufgebracht oder an diesen angebracht werden. In dem Schritt d) werden die Heizflächenelemente und die Trennplatten insbesondere derart abwechselnd angeordnet, dass zwischen zwei Heizflächenelementen eine Trennplatte und umgekehrt angeordnet wird. Dabei können in dem Schritt d) auch die Deckplatten und die Randleisten hinzugefügt werden. In dem Schritt e) wird bevorzugt mit Hilfe eines Lötofens die Wärme in die Heizflächenelemente und die Trennplatten eingebracht, um diese mit Hilfe der Lotschichten zu dem Wärmetauscherblock zu verlöten, insbesondere hartzuverlöten.

Gemäß einer Ausführungsform werden in dem Schritt c) bei dem Teil der Trennplatten, bei denen die Lotschichten zumindest zwei sich in ihrer Legierungszusammensetzung voneinander unterscheidende Lotbereiche umfassen, diese Lotbereiche derart vorgesehen, dass in dem Wärmetauscherblock ein abnehmender Temperaturgradient von Schmelzbereichen der Lotbereiche ausgehend von Außenflächen des Wärmetauscherblocks hin zu einem Kern des Wärmetauscherblocks gebildet wird.

Mit anderen Worten schmelzen die unterschiedlichen Lotbereiche ausgehend von den Außenflächen hin zu dem Kern bei niedrigeren Temperaturen auf. Das heißt, ein im Kern angeordneter Lotbereich schmilzt bei einer geringeren Temperatur auf als ein im Bereich der Außenflächen angeordneter Lotbereich. Unter einem "abnehmenden" Temperaturgradient ist demnach zu verstehen, dass die Schmelzbereiche ausgehend von den Außenflächen hin zu dem Kern kleiner werden.

Gemäß einer weiteren Ausführungsform wird in dem Schritt e) die Wärme derart eingebracht, dass ein abnehmender Temperaturgradient ausgehend von den Außenflächen hin zu dem Kern gebildet wird.

Das heißt, der Wärmetauscherblock wird nicht durchgehend auf dieselbe Temperatur gebracht. Dies reduziert die Lötzeit.

Gemäß einer weiteren Ausführungsform werden in dem Schritt c) bei dem Teil der Trennplatten, bei denen die Lotschichten zumindest zwei sich in ihrer Legierungszusammensetzung voneinander unterscheidende Lotbereiche umfassen, diese Lotbereiche derart vorgesehen, dass die Lotbereiche nebeneinander auf der jeweiligen Trennplatte platziert werden.

Die unterschiedlichen Lotbereiche können gleichzeitig oder nacheinander auf die jeweilige Trennplatte aufgebracht werden. Jede Trennplatte spannt, wie zuvor erwähnt, eine Ebene auf, in der oder auf der die unterschiedlichen Lotbereiche nebeneinander platziert werden.

Gemäß einer weiteren Ausführungsform werden in dem Schritt c) bei dem Teil der Trennplatten, bei denen die Lotschichten zumindest zwei sich in ihrer Legierungszusammensetzung voneinander unterscheidende Lotbereiche umfassen, ein erster Lotbereich und ein zweiter Lotbereich vorgesehen, wobei der erste Lotbereich einen höheren Schmelzbereich als der zweite Lotbereich aufweist, und wobei der zweite Lotbereich so vorgesehen wird, dass dieser von dem ersten Lotbereich umgeben wird.

Wie zuvor erwähnt, ist die Anzahl der unterschiedlichen Lotbereiche beliebig. Beispielsweise kann ein dritter Lotbereich vorgesehen sein, der einen niedrigeren Schmelzbereich als der zweite Lotbereich aufweist. Dabei kann der dritte Lotbereich so angeordnet werden, dass der zweite Lotbereich den dritten Lotbereich, insbesondere rahmenförmig, umgibt.

Die für den Plattenwärmetauscher erläuterten Ausführungsformen und Erläuterungen gelten für die verfahrenstechnische Anlage und das Verfahren entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl an Elementen gegeben ist. Vielmehr sind zahlenmäßige Abweichungen nach oben und nach unten möglich, soweit nichts Gegenteiliges angegeben ist.

Weitere mögliche Implementierungen des Plattenwärmetauschers, der verfahrenstechnischen Anlage und/oder des Verfahrens umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Plattenwärmetauschers, der verfahrenstechnischen Anlage und/oder des Verfahrens hinzufügen.

Weitere vorteilhafte Ausgestaltungen und Aspekte des Plattenwärmetauschers, der verfahrenstechnischen Anlage und/oder des Verfahrens sind Gegenstand der Unteransprüche sowie der im Folgenden beschriebenen Ausführungsbeispiele des Plattenwärmetauschers, der verfahrenstechnischen Anlage und/oder des Verfahrens. Im Weiteren werden der Plattenwärmetauscher, die verfahrenstechnische Anlage und/oder das Verfahren anhand von bevorzugten Ausführungsformen unter Bezugnahme auf die beigelegten Figuren näher erläutert.
Fig. 1 zeigt eine schematische perspektivische Ansicht einer Ausführungsform eines Plattenwärmetauschers;
Fig. 2 zeigt eine schematische perspektivische Ansicht einer Ausführungsform eines Wärmetauscherblocks für den Plattenwärmetauscher gemäß Fig. 1;
Fig. 3 zeigt eine stark schematisierte Seitenansicht des Wärmetauscherblocks gemäß Fig. 2;
Fig. 4 zeigt eine schematische Schnittansicht einer Ausführungsform einer Trennplatte für den Wärmetauscherblock gemäß Fig. 2;
Fig. 5 zeigt eine schematische Aufsicht der Trennplatte gemäß Fig. 4;
Fig. 6 zeigt eine schematische Schnittansicht einer weiteren Ausführungsform einer Trennplatte für den Wärmetauscherblock gemäß Fig. 2;
Fig. 7 zeigt eine schematische Aufsicht der Trennplatte gemäß Fig. 6; und
Fig. 8 zeigt ein schematisches Blockdiagramm einer Ausführungsform eines Verfahrens zum Herstellen des Wärmetauscherblocks gemäß Fig. 2.

In den Figuren sind gleiche oder funktionsgleiche Elemente mit denselben Bezugszeichen versehen worden, sofern nichts anderes angegeben ist.

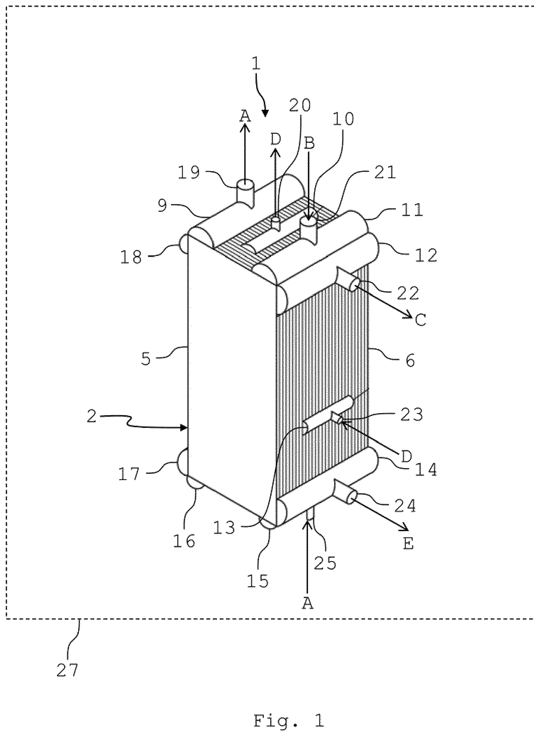

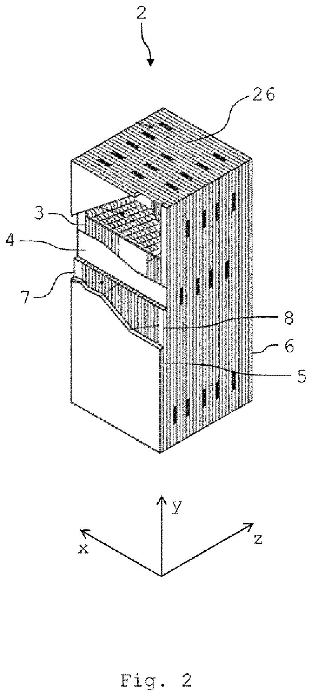

Die Fig. 1 zeigt eine schematische perspektivische Ansicht einer Ausführungsform eines Plattenwärmeübertragers oder Plattenwärmetauschers 1. Die Fig. 2 zeigt eine schematische perspektivische Ansicht einer Ausführungsform eines Wärmetauscherblocks 2 für den Plattenwärmetauscher 1 gemäß Fig. 1. Nachfolgend wird auf die Fig. 1 und 2 gleichzeitig Bezug genommen.

Mit Hilfe des in der Fig. 1 dargestellten Plattenwärmetauschers 1 lässt sich ein Wärmeaustausch zwischen mehreren verschiedenen Fluiden A bis E realisieren. Die Fluide A bis E können auch als Prozessmedien oder Medien bezeichnet werden. Der Plattenwärmetauscher 1 ist insbesondere ein Plate Fin Heat Exchanger (PFHE) oder kann als solcher bezeichnet werden. Der Plattenwärmetauscher 1 ist vorzugsweise aus Bauteilen aufgebaut, die aus Aluminium gefertigt und miteinander verlötet, insbesondere hartverlötet, sind. Der Plattenwärmetauscher 1 kann daher auch als hartgelöteter Aluminium-Plattenwärmetauscher (Engl.: Brazed Aluminum Plate Fin Heat Exchanger) bezeichnet werden.

Der Wärmetauscherblock 2 ist quaderförmig oder blockförmig aufgebaut und umfasst eine Vielzahl an Passagen oder Heizflächenelementen 3 sowie eine Vielzahl an Trennplatten 4. Die Heizflächenelemente 3 sind sogenannte Fins, insbesondere sogenannte Heat Transfer Fins, oder können als Fins bezeichnet werden. Die Heizflächenelemente 3 können als gewellte oder gerippte Bleche, beispielsweise als Aluminiumbleche, ausgebildet sein. Die Trennplatten 4 sind Trennbleche oder können als Trennbleche bezeichnet werden. Die Trennplatten 4 können ebenfalls aus Aluminium gefertigt sein. Die Anzahl der Heizflächenelemente 3 und die Anzahl der Trennplatten 4 ist jeweils beliebig.

Dem Wärmetauscherblock 2 ist ein Koordinatensystem mit einer ersten Raumrichtung oder Breitenrichtung x, einer zweiten Raumrichtung oder Höhenrichtung y und einer dritten Raumrichtung oder Tiefenrichtung z zugeordnet. Die Richtungen x, y, z sind senkrecht zueinander orientiert. Die Breitenrichtung x kann auch als x-Richtung des Wärmetauscherblocks 2 bezeichnet werden. Die Höhenrichtung y kann auch als y-Richtung des Wärmetauscherblocks 2 bezeichnet werden. Die Tiefenrichtung z kann auch als z-Richtung des Wärmetauscherblocks 2 bezeichnet werden.

Die Heizflächenelemente 3 und die Trennplatten 4 sind abwechselnd angeordnet. Das heißt, zwischen zwei Heizflächenelementen 3 ist jeweils eine Trennplatte 4 und zwischen zwei Trennplatten 4 ist jeweils ein Heizflächenelement 3 positioniert. Die Heizflächenelemente 3 und die Trennplatten 4 können dabei stoffschlüssig miteinander verbunden sein. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner voneinander trennen lassen. Insbesondere können die Heizflächenelemente 3 und die Trennplatten 4 miteinander verlötet, insbesondere hartverlötet, sein.

Der Wärmetauscherblock 2 umfasst weiterhin Deckplatten 5, 6, zwischen denen die Vielzahl an Heizflächenelementen 3 und die Vielzahl an Trennplatten 4 angeordnet sind. Die Deckplatten 5, 6 können dabei identisch wie die Trennplatten 4 aufgebaut sein. Die Deckplatten 5, 6 sind dabei außenseitig auf einem jeweils äußersten Heizflächenelement 3 positioniert und schließen den Wärmetauscherblock 2 in der Orientierung der Fig. 1 und 2 nach vorne und hinten ab. Weiterhin umfasst der Wärmetauscherblock 2 sogenannte Sidebars oder Randleisten 7, 8, die die Heizflächenelemente 3 seitlich begrenzen. Die Randleisten 7, 8 können mit den Trennplatten 4 und/oder den Heizflächenelementen 3 stoffschlüssig verbunden, beispielsweise verlötet, insbesondere hartverlötet, sein. Die zuvor genannten Bauteile des Wärmetauscherblocks 2 sind beispielsweise aus dem Werkstoff 3003 (AlMn1Cu) gefertigt.

Mit Hilfe der Heizflächenelemente 3 und der Trennplatten 4 bildet der Plattenwärmetauscher 1 eine Vielzahl an parallelen Wärmeübertragungspassagen aus, in denen die Fluide A bis E strömen können und indirekt Wärme auf in benachbarten Wärmeübertragungspassagen geführte Fluide A bis E übertragen können. Die einzelnen Wärmeübertragungspassagen können mit Hilfe von Anschlusseinrichtungen 9 bis 18 mit einem jeweiligen Fluid A bis E beaufschlagt werden oder das jeweilige Fluid A bis E kann mit Hilfe einer derartigen Anschlusseinrichtung 9 bis 18 von dem Plattenwärmetauscher 1 weggeführt werden. Die Anschlusseinrichtungen 9 bis 18 sind sogenannte Header oder können als solche bezeichnet werden. Die Anschlusseinrichtungen 9 bis 18 können je nach Funktion auch als Verteiler oder Sammler bezeichnet werden.

Beispielsweise sind die Anschlusseinrichtungen 11, 13, 15 dazu geeignet, dem Plattenwärmetauscher 1 die Fluide A, B, D zuzuführen, und die Anschlusseinrichtungen 9, 10, 12, 14 sind dazu geeignet, die Fluide A, C, D, E von dem Plattenwärmetauscher 1 abzuführen. Jeder Anschlusseinrichtung 9 bis 18 ist ein Anschlussstutzen 19 bis 25 zugeordnet, mit dessen Hilfe die jeweilige Anschlusseinrichtung 9 bis 18 mit dem entsprechenden Fluid A bis E beaufschlagt werden kann oder das entsprechende Fluid A bis E von der Anschlusseinrichtung 9 bis 18 weggeführt werden kann. Die Anschlusseinrichtungen 9 bis 18 sind stoffschlüssig mit dem Wärmetauscherblock 2 verbunden. Insbesondere sind die Anschlusseinrichtungen 9 bis 18 mit dem Wärmetauscherblock 2 verschweißt. Die Anschlusseinrichtungen 9 bis 18 können auch mit dem Wärmetauscherblock 2 verlötet sein.

Der Wärmetauscherblock 2 umfasst mehrere, insbesondere sechs, Oberflächen oder Außenflächen 26, von denen in der Fig. 2 nur eine mit einem Bezugszeichen versehen ist. Beispielsweise sind die Anschlusseinrichtungen 9 bis 18 jeweils mit einer der Außenflächen 26 verschweißt. An der in der Fig. 2 mit einem Bezugszeichen versehenen Außenfläche 26 können beispielsweise die Anschlusseinrichtungen 9 bis 11 vorgesehen sein.

Der Plattenwärmetauscher 1 kann Teil einer verfahrenstechnischen Anlage 27 sein. Die verfahrenstechnische Anlage 27 kann beispielsweise eine Anlage zur Luftzerlegung, zur Herstellung von Flüssiggas (Engl.: Liquefied Natural Gas, LNG), eine in der petrochemischen Industrie eingesetzte Anlage oder dergleichen sein. Die verfahrenstechnische Anlage 27 kann eine Vielzahl derartiger Plattenwärmetauscher 1 umfassen.

Wie zuvor erwähnt, sind die Bauteile des Plattenwärmetauschers 1 bevorzugt aus einer Aluminiumlegierung gefertigt. Aus Festigkeitsgründen kommt für die Anschlusseinrichtungen 9 bis 18 bevorzugt eine hochmagnesiumhaltige Aluminiumlegierung, wie beispielsweise der Werkstoff 5083 (AIMg4,5Mn) oder ein vergleichbarer Werkstoff, zur Anwendung. Derartige hochmagnesiumhaltige Aluminiumlegierungen weisen einen Magnesiumgehalt von etwa 4 bis 5% auf. Derartige Aluminiumlegierungen weisen eine hohe Festigkeit auf.

Zum Herstellen des Wärmetauscherblock 2 werden dessen Einzelteile, nämlich die Heizflächenelemente 3, die Trennplatten 4, die Deckplatten 5, 6 sowie die Randleisten 7, 8 unter Verwendung eines Aluminiumlots in einem Lötofen unter Vakuum miteinander verlötet, insbesondere hartverlötet. Das Aluminiumlot kann dabei einseitig oder beidseitig als Lotschicht, insbesondere als Lotplattierung, auf die Trennplatten 4 aufgebracht sein.

Üblicherweise wird dabei eine Aluminiumlotlegierung mit einem relativ engen und hohen Schmelzbereich verwendet. Um die einzelnen Bauteile des Wärmetauscherblocks 2 zuverlässig miteinander verlöten zu können, ist es erforderlich, die Schmelztemperatur des verwendeten Aluminiumlots sowohl im Kern als auch am Rand des Wärmetauscherblocks 2 zu erreichen. Da sich der Wärmetauscherblock 2 im Lötofen von seinem Rand zu seinem Kern hin langsam erwärmt, befindet sich das Aluminiumlot am Rand des Wärmetauscherblocks 2 für mehrere Stunden in einem schmelzflüssigen Bereich. Im Kern hingegen befindet sich das Aluminiumlot nur für einige Minuten im schmelzflüssigen Bereich.

Hierdurch können lange Lötzeiten entstehen. Dies gilt es im Sinne einer wirtschaftlichen Produktion zu vermeiden. Ferner kann es durch die langen Lötzeiten am Rand des Wärmetauscherblocks 2 zu ungünstigen Effekten und Reaktionen zwischen den Trennplatten 4 und den Heizflächenelementen 3 kommen. Besonders die lokale Bildung niedrigschmelzender Al-Si-Eutektika, welche sich durch Erosionserscheinungen an den Heizflächenelementen 3 negativ bemerkbar machen können, gilt es zu vermeiden. Dabei können Löcher und/oder Kerben in die Heizflächenelemente 3 gefressen werden, welche sich durch einen niedrigeren Berstdruck beziehungsweise Betriebsdruck als bei den Qualifizierungen der Heizflächenelemente 3 äußern können. Insbesondere bei höheren und breiteren Konstruktionen des Wärmetauscherblocks 2 kann dies einen stark limitierenden Faktor darstellen.

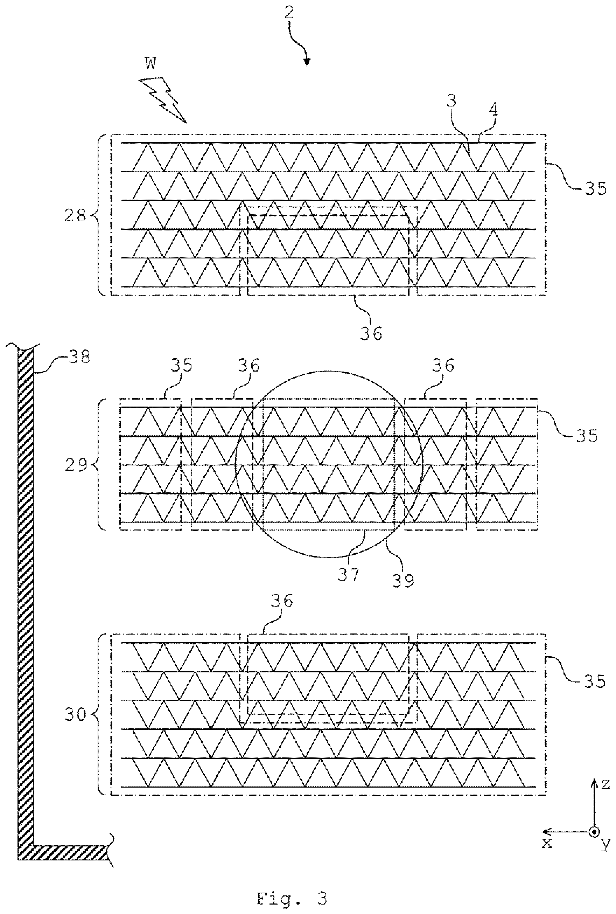

Die Fig. 3 zeigt stark schematisiert eine Ausführungsform eines Wärmetauscherblocks 2, bei dem die zuvor genannten Effekte vermieden werden. Der Wärmetauscherblock 2 umfasst, wie zuvor erwähnt, eine Vielzahl an miteinander verlöteten Heizflächenelementen 3 und Trennplatten 4, von denen in der Fig. 3 lediglich jeweils eines beziehungsweise eine mit einem Bezugszeichen versehen ist. In der Fig. 3 sind nur eine obere Lage 28, eine mittlere Lage 29 und eine untere Lage 30, die jeweils eine Vielzahl an Heizflächenelementen 3 und Trennplatten 4 aufweisen, gezeigt. Die Lagen 28 bis 30 sind in der Tiefenrichtung z derart übereinander angeordnet, dass die mittlere Lage 29 zwischen den Lagen 28, 30 angeordnet ist. Zwischen den Lagen 28 bis 30 kann eine Vielzahl weiterer Lagen mit jeweils einer Vielzahl an Heizflächenelementen 3 und Trennplatten 4 vorgesehen sein. Diese vorgenannten Lagen sind in der Fig. 3 jedoch nicht gezeigt.

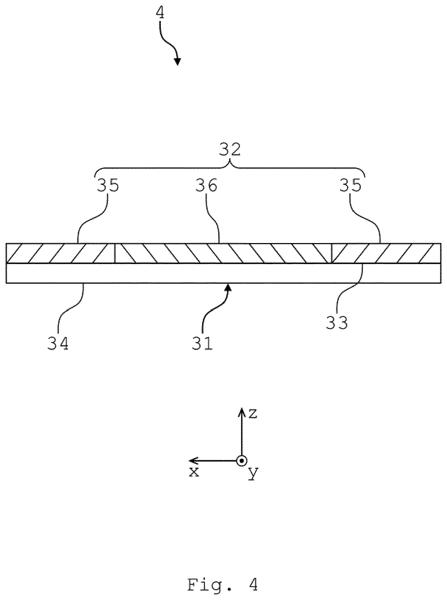

Die Fig. 4 zeigt eine nicht maßstabsgetreue Schnittansicht einer Ausführungsform einer in einer der Lagen 28, 30 angeordneten Trennplatte 4. Die Trennplatte 4 umfasst ein Aluminiumblech 31, auf das, wie in der Fig 4 gezeigt, einseitig oder auch beidseitig (nicht gezeigt) eine Lotschicht 32, insbesondere ein Aluminiumlot, aufgebracht ist. Das Aluminiumblech 31 umfasst eine Vorderseite 33, an der die Lotschicht 32 vorgesehen ist, und eine der Vorderseite 33 abgewandte Rückseite 34. Auch die Rückseite 34 kann mit einer derartigen Lotschicht 32 versehen sein.

Die Lotschicht 32 umfasst einen ersten Lotbereich 35 sowie einen zweiten Lotbereich 36. Die Lotbereiche 35, 36 unterscheiden sich in ihrer Legierungszusammensetzung beziehungsweise in ihrer metallurgischen Zusammensetzung. Das heißt, für die Lotbereiche 35, 36 werden Aluminiumlote mit unterschiedlichen Legierungszusammensetzungen verwandt.

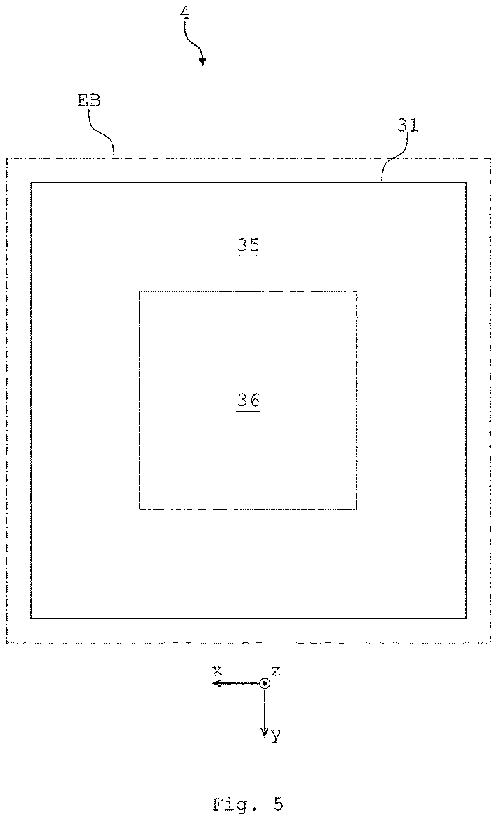

Dabei kann, wie in der Fig. 5 gezeigt, der erste Lotbereich 35 den zweiten Lotbereich 36 in der Breitenrichtung x und in der Höhenrichtung y umschließen. Dies muss jedoch nicht zwingend so vorgesehen sein. Für den ersten Lotbereich 35 kommen Aluminiumlotlegierung mit einem relativen engen und hohen Schmelzbereich zur Anwendung. Für den ersten Lotbereich 35 wird ein Aluminiumlot mit einem Schmelzbereich von 575 bis 630 °C eingesetzt.

Beispielsweise können für den ersten Lotbereich 35 Aluminiumlotlegierungen vom Al-Si-Typ, beispielsweise Al105, AI107 oder Al112, verwendet werden. In der Fig. 3 sind Bereiche des Wärmetauscherblocks 2, in denen die Trennplatten 4 den ersten Lotbereich 35 aufweisen, mit strichpunktierten Linien eingefasst. Jede Trennplatte 4, insbesondere deren Vorderseite 33, spannt in der Breitenrichtung x und in der Höhenrichtung y eine Ebene EB auf. In dieser Ebene EB sind die Lotbereiche 35, 36 nebeneinander platziert.

Der zweite Lotbereich 36 weist im Vergleich zum ersten Lotbereich 35 eine Aluminiumlotlegierung auf, die bei niedrigeren Temperaturen schmilzt. Für den zweiten Lotbereich 36 wird ein Aluminiumlot mit einem Schmelzbereich von 555 bis 595 °C eingesetzt. Beispielsweise können für den zweiten Lotbereich 36 Aluminiumlotlegierungen vom Al-Si-Mg-Typ, beispielsweise Al310 oder Al311, verwendet werden. In der Fig. 3 sind Bereiche des Wärmetauscherblocks 2, in denen die Trennplatten 4 den zweiten Lotbereich 36 aufweisen, mit gestrichelten Linien eingefasst.

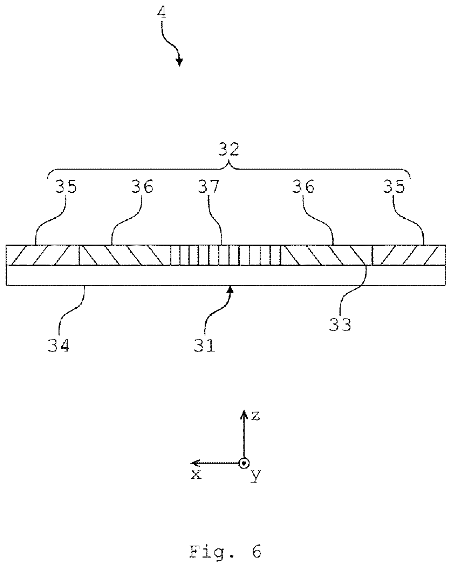

Die Fig. 6 zeigt eine nicht maßstabsgetreue Schnittansicht einer Ausführungsform einer in der mittleren Lage 29 angeordneten Trennplatte 4. Die Trennplatte 4 umfasst, wie zuvor erwähnt, ein Aluminiumblech 31, auf das einseitig oder auch beidseitig (nicht gezeigt) die Lotschicht 32 aufgebracht ist. Die Lotschicht 32 umfasst in der mittleren Lage 29 neben dem ersten Lotbereich 35 und dem zweiten Lotbereich 36 einen dritten Lotbereich 37. Die Lotbereiche 35, 36, 37 unterscheiden sich in ihrer Legierungszusammensetzung beziehungsweise in ihrer metallurgischen Zusammensetzung. Das heißt, für die Lotbereiche 35, 36, 37 werden Aluminiumlote mit unterschiedlichen Legierungszusammensetzungen verwandt.

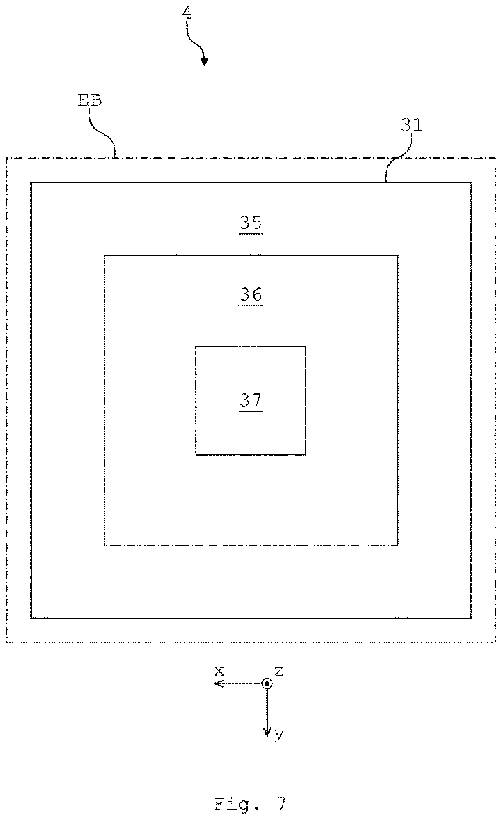

Dabei können, wie in der Fig. 7 gezeigt, der erste Lotbereich 35 und der zweite Lotbereich 36 den dritten Lotbereich 37 derart umschließen, dass der zweite Lotbereich 36 in der Breitenrichtung x und in der Höhenrichtung y betrachtet zwischen dem ersten Lotbereich 35 und dem dritten Lotbereich 37 angeordnet ist. Dies muss jedoch nicht zwingend so vorgesehen sein. In der zuvor erwähnten Ebene EB sind die Lotbereiche 35 bis 37 nebeneinander platziert.

Der dritte Lotbereich 37 weist im Vergleich zum zweiten Lotbereich 36 eine Aluminiumlotlegierung auf, die bei niedrigeren Temperaturen schmilzt. Für den dritten Lotbereich 37 wird ein Aluminiumlot mit einem Schmelzbereich von 520 bis 585 °C beziehungsweise 595 °C eingesetzt. Beispielsweise können für den dritten Lotbereich 37 Aluminiumlotlegierungen vom Al-Si-Mg-Typ oder Al-Si-Cu-Typ, beispielsweise Al319, Al210 oder Al410, verwendet werden. In der Fig. 3 ist ein Bereich des Wärmetauscherblocks 2, in dem die Trennplatten 4 den dritten Lotbereich 37 aufweisen, mit gepunkteten Linien eingefasst.

Die Funktionalität der Trennplatten 4 mit ihren unterschiedlich zusammengesetzten Lotschichten 32 wird nachfolgend erläutert. Die abwechselnd aufeinander gestapelten Heizflächenelemente 3 und Trennplatten 4 werden in einem in der Fig. 3 nur teilweise gezeigten Lötofen 38 erhitzt, wobei Wärme W in die Bauteile des Wärmetauscherblocks 2 eingebracht wird. In der Fig. 3 sind zur vereinfachten Darstellung die Deckplatten 5, 6 und die Randleisten 7, 8 nicht gezeigt.

Mit Hilfe der eingebrachten Wärme W wird der noch nicht verlötete Wärmetauscherblock 2 von den Außenflächen 26 (Fig. 2) her in Richtung eines Kerns 39 des Wärmetauscherblocks 2 langsam erwärmt. Wie zuvor schon erwähnt, umfasst der quaderförmige Wärmetauscherblock 2 sechs Außenflächen 26, von denen in der Fig. 2 nur eine mit einem Bezugszeichen versehen ist. Unter dem "Kern" 39 des Wärmetauscherblocks 2 ist vorliegend ein Bereich des Wärmetauscherblocks 2 zu verstehen, der am weitesten von den sechs Außenflächen 26 entfernt angeordnet ist. Der Kern 39 ist also mittig in dem Wärmetauscherblock 2 vorgesehen. In der Fig. 3 ist der Kern 39 sehr stark vereinfacht mit einer kreisförmigen beziehungsweise kugelförmigen Geometrie dargestellt. Der Kern 39 kann jedoch jede beliebige andere dreidimensionale Geometrie aufweisen. Der Kern 39 kann, wie der Wärmetauscherblock 2 selbst, quaderförmig sein.

Bis der Wärmetauscherblock 2 vollständig durcherhitzt ist, das heißt, bis sowohl die Außenflächen 26 als auch der Kern 39 dieselbe Temperatur aufweisen, bildet sich ein Temperaturgradient von den Außenflächen 26 in Richtung des Kerns 39. Hierunter ist zu verstehen, dass die Temperatur von den Außenflächen 26 in Richtung des Kerns 39 absinkt beziehungsweise, dass die Temperatur ausgehend von dem Kern 39 in Richtung der Außenflächen 26 ansteigt. Aufgrund der unterschiedlichen Schmelzbereiche der Lotbereiche 35 bis 37 kann dieser Temperaturgradient ausgenutzt werden, um die Lotbereiche 35 bis 37 nahezu zeitgleich aufzuschmelzen, wobei es ist nicht erforderlich ist, den Wärmetauscherblock 2 derart durchzuerhitzen, dass der Kern 39 und die Außenflächen 26 dieselbe Temperatur aufweisen.

Auch die Lotbereiche 35 bis 37 weisen einen Temperaturgradienten hinsichtlich ihrer Schmelzbereiche derart auf, dass die Schmelztemperatur des jeweiligen Lotbereichs 35 bis 37 ausgehend von den Außenflächen 26 in Richtung des Kerns 39 absinkt. Wie zuvor erwähnt, weist der nah den Außenflächen 26 angeordnete erste Lotbereich 35 den höchsten Schmelzbereich auf, und der nah des Kerns 39 angeordnete dritte Lotbereich 37 weist den niedrigsten Schmelzbereich auf. Der Schmelzbereich des zweiten Lotbereichs 36 liegt zwischen den Schmelzbereichen der Lotbereiche 35, 37. Der Temperaturgradient der Schmelzbereiche der Lotbereiche 35 bis 37 folgt somit dem Temperaturgradienten innerhalb des Wärmetauscherblocks 2 bei einem Erwärmen desselben.

Es ist somit möglich, den Temperaturgradienten beim Erhitzen des Wärmetauscherblocks 2 derart auszunutzen, dass selbst dann, wenn der Wärmetauscherblock 2 noch nicht vollständig durcherhitzt ist, alle Lotbereiche 35 bis 37 aufgrund ihrer unterschiedlichen Schmelzbereiche nahezu zeitgleich aufgeschmolzen werden. Hierdurch kann auf ein vollständiges Durcherhitzen des Wärmetauscherblocks 2 verzichtet werden. Dies verkürzt die Lötzeiten, insbesondere bei Wärmetauscherblöcken 2 mit großen Abmessungen. Ferner können die zuvor erwähnten unerwünschten Effekte und Reaktionen zwischen den Trennplatten 4 und den Heizflächenelementen 3 am Rand, das heißt im Bereich der Außenflächen 26, des Wärmetauscherblocks 2 verhindert werden. Insbesondere kann hierdurch die lokale Bildung niedrigschmelzender Al-Si-Eutektika vermieden werden.

Es kann somit in allen drei Richtungen x, y, z ein Temperaturgradient des Schmelzbereichs der Lotschichten 32 der Trennplatten 4 erreicht werden. Die Trennplatten 4 können so an den jeweiligen Anwendungsfall angepasst werden. Es können somit "maßgeschneiderte" Trennplatten 4 (Engl.: Tailored Brazing Sheets) hergestellt und verwendet werden, welche je nach Lage der jeweiligen Trennplatte 4 im Wärmetauscherblock 2 unterschiedliche Lotschichten 32 mit unterschiedlich zusammengesetzten Lotbereichen 35 bis 37 aufweisen.

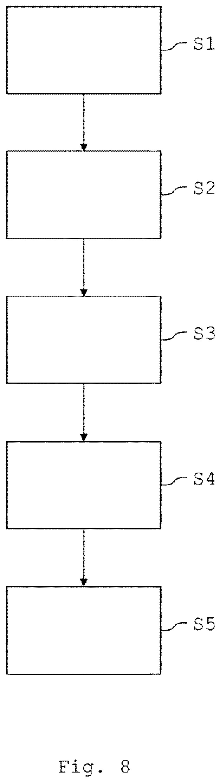

Die Fig. 8 zeigt zusammenfassend ein schematisches Blockdiagramm einer Ausführungsform eines Verfahrens zum Herstellen des Wärmetauscherblocks 2. Bei dem Verfahren wird in einem Schritt S1 eine Vielzahl an Heizflächenelementen 3 bereitgestellt. Hierbei können beispielsweise Aluminiumbleche gewellt oder gerippt werden. In einem Schritt S2 wird eine Vielzahl an Trennplatten 4 bereitgestellt. Beispielsweise werden hierzu Aluminiumbleche 31 passend zugeschnitten. Die Schritte S1 und S2 können gleichzeitig oder aufeinanderfolgend durchgeführt werden.

In einem Schritt S3 werden Lotschichten 32 an den Trennplatten 4 vorgesehen, wobei, wie zuvor erwähnt, bei zumindest einem Teil der Trennplatten 4 die Lotschichten 32 zumindest zwei sich in ihrer Legierungszusammensetzung voneinander unterscheidende Lotbereiche 35 bis 37 umfassen. Der Schritt S3 kann zusammen mit dem Schritt S2, vor diesem oder nach diesem durchgeführt werden.

Anschließend werden in einem Schritt S4 die Heizflächenelemente 3 und die Trennplatten 4 derart abwechselnd angeordnet, dass zwischen zwei Heizflächenelementen 3 eine Trennplatte 4 und umgekehrt angeordnet wird. Dabei können auch die Deckplatten 5, 6 und die Randleisten 7, 8 hinzugefügt werden. In einem abschließenden Schritt S5 wird mit Hilfe des Lötofens 38 Wärme W in die Heizflächenelemente 3 und die Trennplatten 4 eingebracht, um diese mit Hilfe der Lotschichten 32 zu dem Wärmetauscherblock 2 zu verlöten, insbesondere hartzuverlöten.

Bevorzugt werden bei dem Schritt S3 bei dem Teil der Trennplatten 4, bei denen die Lotschichten 32 zumindest die zwei sich in ihrer Legierungszusammensetzung voneinander unterscheidenden Lotbereiche 35 bis 37 umfassen, diese Lotbereiche 35 bis 37 derart vorgesehen, dass in dem Wärmetauscherblock 2 ein abnehmender Temperaturgradient von Schmelzbereichen der Lotbereiche 35 bis 37 ausgehend von den Außenflächen 26 des Wärmetauscherblocks 2 hin zu dem Kern 39 desselben gebildet wird. "Abnehmend" heißt dabei, dass die Schmelzbereiche von den Außenflächen 26 in Richtung des Kerns in ihrer Temperatur abnehmen. Entsprechend wird in dem Schritt S4 die Wärme W derart eingebracht, dass ein abnehmender Temperaturgradient ausgehend von den Außenflächen 26 hin zu dem Kern 39 gebildet wird. Auf ein Durcherhitzen des Wärmetauscherblocks 2 derart, dass dieser sowohl an den Außenflächen 26 als auch in dem Kern 39 dieselbe Temperatur aufweist, kann verzichtet werden.

In dem Schritt S3 werden bevorzugt bei dem Teil der Trennplatten 4, bei denen die Lotschichten 32 zumindest die zwei sich in ihrer Legierungszusammensetzung voneinander unterscheidenden Lotbereiche 35 bis 37 umfassen, diese Lotbereiche 35 bis 37 derart vorgesehen, dass die Lotbereiche 35 bis 37 nebeneinander auf der jeweiligen Trennplatte 4 beziehungsweise auf oder in der Ebene EB platziert sind. Die Anzahl der unterschiedlichen Lotbereiche 35 bis 37 ist grundsätzlich beliebig.

Ferner werden in dem Schritt S3 bei dem Teil der Trennplatten 4, bei denen die Lotschichten 32 zumindest die zwei sich in ihrer Legierungszusammensetzung voneinander unterscheidenden Lotbereiche 35 bis 37 umfassen, der erste Lotbereich 35 und der zweite Lotbereich 36 vorgesehen, wobei der erste Lotbereich 35 einen höheren Schmelzbereich als der zweite Lotbereich 36 aufweist. Dabei wird der zweite Lotbereich 36 so vorgesehen, dass dieser von dem ersten Lotbereich 35 umgeben wird. In diesem Schritt S3 kann auch noch der dritte Lotbereich 37 vorgesehen werden. Vorteilhafterweise kann somit bei dem Wärmetauscherblock 2 beziehungsweise mit dem Verfahren eine Reduzierung der Lötzeiten erreicht werden. Ferner können Wärmetauscherblöcke 2 mit größeren Abmessungen ohne die zuvor genannten Nachteile gelötet werden. Die Bildung von Al-Si-Eutektika kann verhindert werden, womit eine Erhöhung der Berstdrücke einhergeht.

Obwohl die vorliegende Erfindung anhand von Ausführungsbeispielen beschrieben wurde, ist sie im Rahmen der nachfolgenden Ansprüche vielfältig modifizierbar.

### Verwendete Bezugszeichen

- 1: Plattenwärmetauscher
- 2: Wärmetauscherblock
- 3: Heizflächenelement
- 4: Trennplatte
- 5: Deckplatte
- 6: Deckplatte
- 7: Randleiste
- 8: Randleiste
- 9: Anschlusseinrichtung
- 10: Anschlusseinrichtung
- 11: Anschlusseinrichtung
- 12: Anschlusseinrichtung
- 13: Anschlusseinrichtung
- 14: Anschlusseinrichtung
- 15: Anschlusseinrichtung
- 16: Anschlusseinrichtung
- 17: Anschlusseinrichtung
- 18: Anschlusseinrichtung
- 19: Anschlussstutzen
- 20: Anschlussstutzen
- 21: Anschlussstutzen
- 22: Anschlussstutzen
- 23: Anschlussstutzen
- 24: Anschlussstutzen
- 25: Anschlussstutzen
- 26: Außenfläche
- 27: verfahrenstechnische Anlage
- 28: Lage
- 29: Lage
- 30: Lage
- 31: Aluminiumblech
- 32: Lotschicht
- 33: Vorderseite
- 34: Rückseite
- 35: Lotbereich
- 36: Lotbereich
- 37: Lotbereich
- 38: Lötofen
- 39: Kern

- A: Fluid
- B: Fluid
- C: Fluid
- D: Fluid
- E: Fluid
- EB: Ebene
- S1: Schritt
- S2: Schritt
- S3: Schritt
- S4: Schritt
- S5: Schritt
- W: Wärme
- x: Breitenrichtung
- y: Höhenrichtung
- z: Tiefenrichtung

## Patentansprüche

1. Plattenwärmetauscher (1) für eine verfahrenstechnische Anlage (27), mit einem Wärmetauscherblock (2), der eine Vielzahl abwechselnd angeordneter Heizflächenelemente (3) und Trennplatten (4) umfasst, wobei die Trennplatten (4) mit Hilfe an den Trennplatten (4) vorgesehener Lotschichten (32) mit den Heizflächenelementen (3) verlötet sind, **dadurch gekennzeichnet, dass** bei zumindest einem Teil der Trennplatten (4) die Lotschichten (32) zumindest zwei sich in ihrer Legierungszusammensetzung voneinander unterscheidende Lotbereiche (35 - 37) umfassen.

2. Plattenwärmetauscher nach Anspruch 1, wobei die Lotbereiche (35 - 37) sich voneinander unterscheidende Schmelzbereiche aufweisen.

3. Plattenwärmetauscher nach Anspruch 2, wobei die Lotbereiche (35 - 37) so angeordnet sind, dass ein Temperaturgradient der Schmelzbereiche derart ausgebildet ist, dass die Schmelzbereiche ausgehend von Außenflächen (26) des Wärmetauscherblocks (2) hin zu einem Kern (39) des Wärmetauscherblocks (2) abnehmen.

4. Plattenwärmetauscher nach Anspruch 3, wobei der Wärmetauscherblock (2) eine Breitenrichtung (x), eine Höhenrichtung (y) und eine Tiefenrichtung (z) aufweist, und wobei der Temperaturgradient der Schmelzbereiche in jeder der Richtungen (x, y, z) ausgehend von den Außenflächen (26) hin zu dem Kern (39) vorgesehen ist.

5. Plattenwärmetauscher nach einem der Ansprüche 1 - 4, wobei bei den Trennplatten (4), die Lotschichten (32) mit zumindest zwei sich in ihrer Legierungszusammensetzung voneinander unterscheidenden Lotbereiche (35 - 37) umfassen, die Lotbereiche (35 - 37) nebeneinander auf der jeweiligen Trennplatte (4) platziert sind.

6. Plattenwärmetauscher nach Anspruch 5, wobei ein erster Lotbereich (35) und ein zweiter Lotbereich (36) vorgesehen sind, wobei der erste Lotbereich (35) einen höheren Schmelzbereich als der zweite Lotbereich (36) aufweist, und wobei der zweite Lotbereich (36) von dem ersten Lotbereich (35) umgeben ist.

7. Plattenwärmetauscher nach Anspruch 6, wobei ein dritter Lotbereich (37) vorgesehen ist, wobei der zweite Lotbereich (36) einen höheren Schmelzbereich als der dritte Lotbereich (37) aufweist, wobei der dritte Lotbereich (37) von dem zweiten Lotbereich (36) umgeben ist.

8. Plattenwärmetauscher nach einem der Ansprüche 1 - 7, wobei die Trennplatten (4) jeweils ein Aluminiumblech (31) aufweisen, auf das die jeweilige Lotschicht (32) aufgebracht ist.

9. Plattenwärmetauscher nach Anspruch 8, wobei die Lotschicht (32) einseitig oder beidseitig auf das Aluminiumblech (31) aufgebracht ist.

10. Verfahrenstechnische Anlage (27) mit einem Plattenwärmetauscher (1) nach einem der Ansprüche 1 - 9.

11. Verfahren zum Herstellen eines Wärmetauscherblocks (2) für einen Plattenwärmetauscher (1) einer verfahrenstechnischen Anlage (27), mit folgenden Schritten:
a) Bereitstellen (S1) einer Vielzahl an Heizflächenelementen (3),
b) Bereitstellen (S2) einer Vielzahl an Trennplatten (4),
c) Vorsehen von (S3) Lotschichten (32) an den Trennplatten (4),
d) abwechselndes Anordnen (S4) der Heizflächenelemente (3) und der Trennplatten (4), und
e) Einbringen (S5) von Wärme (W) in die Heizflächenelemente (3) und die Trennplatten (4), um diese mit Hilfe der Lotschichten (32) zu dem Wärmetauscherblock (2) zu verlöten
**dadurch gekennzeichnet, dass** bei zumindest einem Teil der Trennplatten (4) die Lotschichten (32) zumindest zwei sich in ihrer Legierungszusammensetzung voneinander unterscheidende Lotbereiche (35 - 37) umfassen.

12. Verfahren nach Anspruch 11, wobei in dem Schritt c) bei dem Teil der Trennplatten (4), bei denen die Lotschichten (32) zumindest zwei sich in ihrer Legierungszusammensetzung voneinander unterscheidende Lotbereiche (35 - 37) umfassen, diese Lotbereiche (35 - 37) derart vorgesehen werden, dass in dem Wärmetauscherblock (2) ein abnehmender Temperaturgradient von Schmelzbereichen der Lotbereiche (35 - 37) ausgehend von Außenflächen (26) des Wärmetauscherblocks (2) hin zu einem Kern (39) des Wärmetauscherblocks (2) gebildet wird.

13. Verfahren nach Anspruch 12, wobei in dem Schritt e) die Wärme (W) derart eingebracht wird, dass ein abnehmender Temperaturgradient ausgehend von den Außenflächen (26) hin zu dem Kern (39) gebildet wird.

14. Verfahren einem der Ansprüche 11 - 13, wobei in dem Schritt c) bei dem Teil der Trennplatten (4), bei denen die Lotschichten (32) zumindest zwei sich in ihrer Legierungszusammensetzung voneinander unterscheidende Lotbereiche (35 - 37) umfassen, diese Lotbereiche (35 - 37) derart vorgesehen werden, dass die Lotbereiche (35 - 37) nebeneinander auf der jeweiligen Trennplatte (4) platziert werden.

15. Verfahren nach Anspruch 14, wobei in dem Schritt c) bei dem Teil der Trennplatten (4), bei denen die Lotschichten (32) zumindest zwei sich in ihrer Legierungszusammensetzung voneinander unterscheidende Lotbereiche (35 - 37) umfassen, ein erster Lotbereich (35) und ein zweiter Lotbereich (36) vorgesehen werden, wobei der erste Lotbereich (35) einen höheren Schmelzbereich als der zweite Lotbereich (36) aufweist, und wobei der zweite Lotbereich (36) so vorgesehen wird, dass dieser von dem ersten Lotbereich (35) umgeben wird.

## Claims

1. Plate heat exchanger (1) for a process engineering plant (27), having a heat exchanger block (2) which comprises a plurality of alternately arranged heat surface elements (3) and separating plates (4), the separating plates (4) being soldered to the heat surface elements (3) using solder layers (32) provided on the separating plates (4), **characterized in that** for at least a part of the separating plates (4), the solder layers (32) comprise at least two solder regions (35-37) that differ from one another in their alloy composition.

2. Plate heat exchanger according to claim 1, wherein the solder regions (35-37) have different melting ranges.

3. Plate heat exchanger according to claim 2, wherein the solder regions (35-37) are arranged so that a temperature gradient of the melting ranges is formed such that the melting ranges decrease, starting from outer surfaces (26) of the heat exchanger block (2) toward a core (39) of the heat exchanger block (2).

4. Plate heat exchanger according to claim 3, wherein the heat exchanger block (2) has a width direction (x), a height direction (y) and a depth direction (z), and wherein the temperature gradient of the melting ranges in each of the directions (x, y, z) is provided, starting from the outer surfaces (26) toward the core (39).

5. Plate heat exchanger according to any of claims 1-4, wherein for the separating plates (4) comprising solder layers (32) having at least two solder regions (35-37) that differ from one another in their alloy composition, the solder regions (35-37) are placed next to one another on the relevant separating plate (4).

6. Plate heat exchanger according to claim 5, wherein a first solder region (35) and a second solder region (36) are provided, wherein the first solder region (35) has a higher melting range than the second solder region (36), and wherein the second solder region (36) is surrounded by the first solder region (35).

7. Plate heat exchanger according to claim 6, wherein a third solder region (37) is provided, wherein the second solder region (36) has a higher melting range than the third solder region (37), wherein the third solder region (37) is surrounded by the second solder region (36).

8. Plate heat exchanger according to any of claims 1-7, wherein the separating plates (4) each have an aluminum sheet (31) onto which the relevant solder layer (32) is applied.

9. Plate heat exchanger according to claim 8, wherein the solder layer (32) is applied on one or both sides of the aluminum sheet (31).

10. Process engineering plant (27) having a plate heat exchanger (1) according to any of claims 1-9.

11. Method for producing a heat exchanger block (2) for a plate heat exchanger (1) of a process engineering plant (27), comprising the following steps:
a) providing (S1) a plurality of heat surface elements (3),
b) providing (S2) a plurality of separating plates (4),
c) providing (S3) solder layers (32) on the separating plates (4),
e) alternately arranging (S4) the heat surface elements (3) and the separating plates (4), and
e) introducing (S5) heat (W) into the heat surface elements (3) and the separating plates (4) in order to solder them to the heat exchanger block (2) using the solder layers (32)
**characterized in that** for at least a part of the separating plates (4), the solder layers (32) comprise at least two solder regions (35-37) that differ from one another in their alloy composition.

12. Method according to claim 11, wherein in step c), for the part of the separating plates (4) in which the solder layers (32) comprise at least two solder regions (35-37) that differ from one another in their alloy composition, these solder regions (35-37) are provided such that a decreasing temperature gradient of melting ranges of the solder regions (35-37) is formed in the heat exchanger block (2), starting from outer surfaces (26) of the heat exchanger block (2) toward a core (39) of the heat exchanger block (2).

13. Method according to claim 12, wherein in step e), the heat (W) is introduced such that a decreasing temperature gradient is formed, starting from the outer surfaces (26) toward the core (39).

14. Method any of claims 11-13, wherein in step c), for the part of the separating plates (4) in which the solder layers (32) comprise at least two solder regions (35-37) that differ from one another in their alloy composition, these solder regions (35-37) are provided such that the solder regions (35-37) are placed next to one another on the relevant separating plate (4).

15. Method according to claim 14, wherein in step c), for the part of the separating plates (4), in which the solder layers (32) comprise at least two solder regions (35-37) that differ from one another in their alloy composition, a first solder region (35) and a second solder region (36) are provided, the first solder region (35) having a higher melting range than the second solder region (36), and the second solder region (36) being provided such that it is surrounded by the first solder region (35).

## Revendications

1. Échangeur de chaleur en plaques (1) pour une installation technique de procédé (27), comportant un bloc d'échangeur de chaleur (2), qui comprend une pluralité d'éléments de surface chauffante (3) et de plaques séparatrices (4) agencés en alternance, dans lequel les plaques séparatrices (4) sont soudées aux éléments de surface chauffante (3) à l'aide de couches de soudure (32) prévues sur les plaques séparatrices (4), **caractérisé en ce que,** pour au moins une partie des plaques séparatrices (4), les couches de soudure (32) comprennent au moins deux zones de soudure (35 - 37) différentes l'une de l'autre dans leur composition d'alliage.

2. Échangeur de chaleur en plaques selon la revendication 1, dans lequel les zones de soudure (35 - 37) présentent des plages de fusion différentes les unes des autres.

3. Échangeur de chaleur en plaques selon la revendication 2, dans lequel les zones de soudure (35 - 37) sont agencées de telle sorte qu'un gradient de température des plages de fusion soit formé de manière à ce que les plages de fusion diminuent en partant des surfaces externes (26) du bloc d'échangeur de chaleur (2) jusqu'à un noyau (39) du bloc d'échangeur de chaleur (2).

4. Échangeur de chaleur en plaques selon la revendication 3, dans lequel le bloc d'échangeur de chaleur (2) présente une direction de largeur (x), une direction de hauteur (y) et une direction de profondeur (z) et dans lequel le gradient de température des plages de fusion est prévu dans chacune des directions (x, y, z) en partant des surfaces externes (26) jusqu'au noyau (39).

5. Échangeur de chaleur en plaques selon l'une des revendications 1 à 4, dans lequel pour les plaques séparatrices (4), qui comprennent des couches de soudure (32) avec au moins deux zones de soudure (35 - 37) différentes l'une de l'autre dans leur composition d'alliage, les zones de soudure (35 - 37) sont placées adjacentes sur la plaque séparatrice (4) respective.

6. Échangeur de chaleur en plaques selon la revendication 5, dans lequel une première zone de soudure (35) et une deuxième zone de soudure (36) sont prévues, dans lequel la première zone de soudure (35) présente une plage de fusion supérieure à la deuxième zone de soudure (36) et dans lequel la deuxième zone de soudure (36) est entourée par la première zone de soudure (35).

7. Échangeur de chaleur en plaques selon la revendication 6, dans lequel une troisième zone de soudure (37) est prévue, dans lequel la deuxième zone de soudure (36) présente une plage de fusion supérieure à la troisième zone de soudure (37), dans lequel la troisième zone de soudure (37) est entourée par la deuxième zone de soudure (36).

8. Échangeur de chaleur en plaques selon l'une des revendications 1 à 7, dans lequel les plaques séparatrices (4) présentent respectivement une tôle d'aluminium (31), sur laquelle est appliquée la couche de soudure (32) respective.

9. Échangeur de chaleur en plaques selon la revendication 8, dans lequel la couche de soudure (32) est appliquée sur un côté ou les deux sur la tôle d'aluminium (31).

10. Installation technique de procédé (27) comprenant un échangeur de chaleur en plaques (1) selon l'une des revendications 1 à 9.

11. Procédé de fabrication d'un bloc d'échangeur de chaleur (2) pour un échangeur de chaleur en plaques (1) d'une installation technique de procédé (27) comprenant les étapes suivantes :
a) préparation (S1) d'une pluralité d'éléments de surface chauffante (3),
b) préparation (S2) d'une pluralité de plaques séparatrices (4),
c) prévision (S3) de couches de soudure (32) sur les plaques séparatrices (4),
d) agencement alterné (S4) des éléments de surface chauffante (3) et des plaques séparatrices (4) et
e) introduction (S5) de chaleur (W) dans les éléments de surface chauffante (3) et les plaques séparatrices (4), afin de les souder à l'aide des couches de soudure (32) au bloc d'échangeur de chaleur (2)
**caractérisé en ce que,** pour au moins une partie des plaques séparatrices (4), les couches de soudure (32) comprennent au moins deux zones de soudure (35 - 37) différentes l'une de l'autre dans leur composition d'alliage.

12. Procédé selon la revendication 11, dans lequel dans l'étape c) pour la partie des plaques séparatrices (4), pour lesquelles les couches de soudure (32) comprennent au moins deux zones de soudure (35 - 37) différentes l'une de l'autre dans leur composition d'alliage, ces zones de soudure (35 - 37) sont prévues de telle sorte que dans le bloc d'échangeur de chaleur (2), un gradient de température décroissant des plages de fusion des zones de soudure (35 - 37) soit formé en partant des surfaces externes (26) du bloc d'échangeur de chaleur (2) jusqu'à un noyau (39) du bloc d'échangeur de chaleur (2).

13. Procédé selon la revendication 12, dans lequel dans l'étape e), la chaleur (W) est introduite de telle sorte qu'un gradient de température décroissant soit formé en partant des surfaces externes (26) jusqu'au noyau (39).

14. Procédé selon l'une des revendications 11 à 13, dans lequel dans l'étape c) pour la partie des plaques séparatrices (4), pour lesquelles les couches de soudure (32) comprennent au moins deux zones de soudure (35 - 37) différentes l'une de l'autre dans leur composition d'alliage, ces zones de soudure (35 - 37) sont prévues de telle sorte que les zones de soudure (35 - 37) soient placées adjacentes sur la plaque séparatrice (4) respective.

15. Procédé selon la revendication 14, dans lequel dans l'étape c) pour la partie des plaques séparatrices (4), pour lesquelles les couches de soudure (32) comprennent au moins deux zones de soudure (35 - 37) différentes l'une de l'autre dans leur composition d'alliage, une première zone de soudure (35) et une deuxième zone de soudure (36) soient prévues, dans lequel la première zone de soudure (35) présente une plage de fusion supérieure à la deuxième zone de soudure (36) et dans lequel la deuxième zone de soudure (36) est prévue de manière à être entourée par la première zone de soudure (35).
